# FASCICULE DE BREVET EUROPEEN

(11) **EP 1 454 776 B1**
(45) Date de publication et mention de la délivrance du brevet: **05.01.2011**
(21) Numéro de dépôt: 04364021.8
(22) Date de dépôt: 05.03.2004
(51) Int. Cl.: B60G 21/05

(54) **Essieu à traverse déformable en torsion et procédé de fabrication de la traverse**
Verbundlenkerachse und Verfahren zur Herstellung eines Querträgers
Twist-beam axle and method of making the cross-beam

(30) Priorité: 06.03.2003 FR 0303026
(43) Date de publication de la demande: 08.09.2004
(73) Titulaire: Auto Chassis International SNC, 72086 Le Mans Cédex 9 (FR)
(72) Inventeur: Dube, Emmanuel, 72220 Laigne en Belin (FR); Gillet, Vincent, 72650 La Milesse (FR); Veneau, Jean, 72370 Ardennais sur Merize (FR); Assier de Pompignan, Alexis, 72000 Le Mans (FR)
(74) Mandataire: Religieux, Vincent

(56) Documents cités:
- EP-A- 0 552 537
- DE-A- 19 846 400
- PATENT ABSTRACTS OF JAPAN vol. 2000, no. 09, 13 octobre 2000 (2000-10-13) & JP 2000 177349 A (NISSAN MOTOR CO LTD), 27 juin 2000 (2000-06-27)

## Description

### 1 - domaine technique de l'invention :

Le domaine de l'invention est celui des suspensions de véhicule automobile. Plus précisément, l'invention concerne les essieux souples pour roues non motrices d'un véhicule automobile, et notamment la façon de réaliser la fonction raideur anti-dévers de cet essieu.

### 2 - état de la technique :

Actuellement, sur les essieux souples, la fonction anti-dévers est réalisée suivant deux technologies différentes.

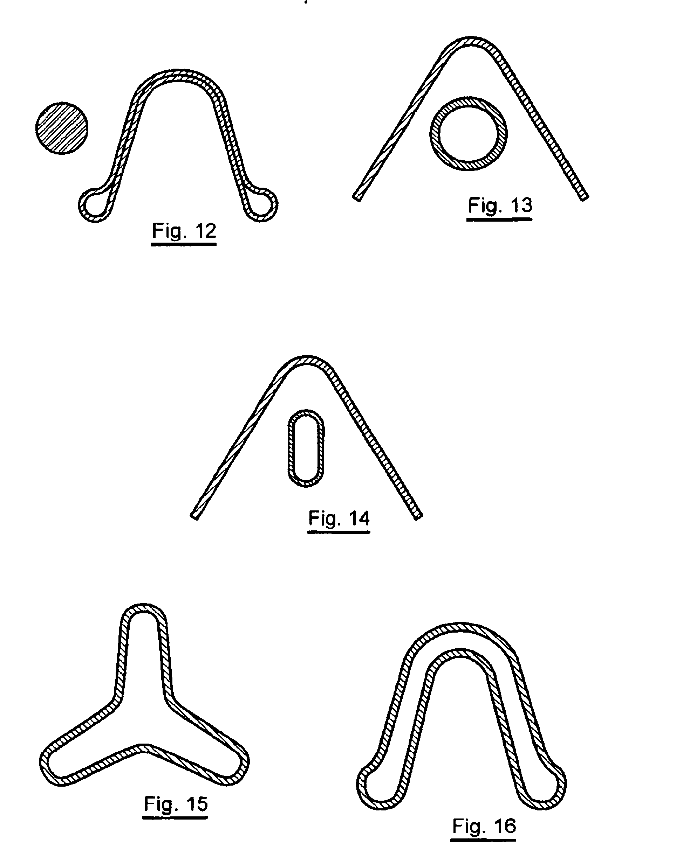

La première consiste à utiliser une pièce transversale (traverse) reliant les deux bras longitudinaux de l'essieu et d'une barre de torsion (barre anti-devers) rapportée assurant la plus grande partie de la raideur anti-dévers. Différents modes de mise en oeuvre de cette technique sont illustrés par les figures 12, 13 et 14.

Cette barre de section cylindrique creuse, pleine ou de forme oblongue creuse, est reliée à l'essieu soit par soudage sur les bras longitudinaux de l'essieu, soit par soudage sur des supports spécifiques reliés à l'essieu (exemple : Renault Clio (marques déposées)).

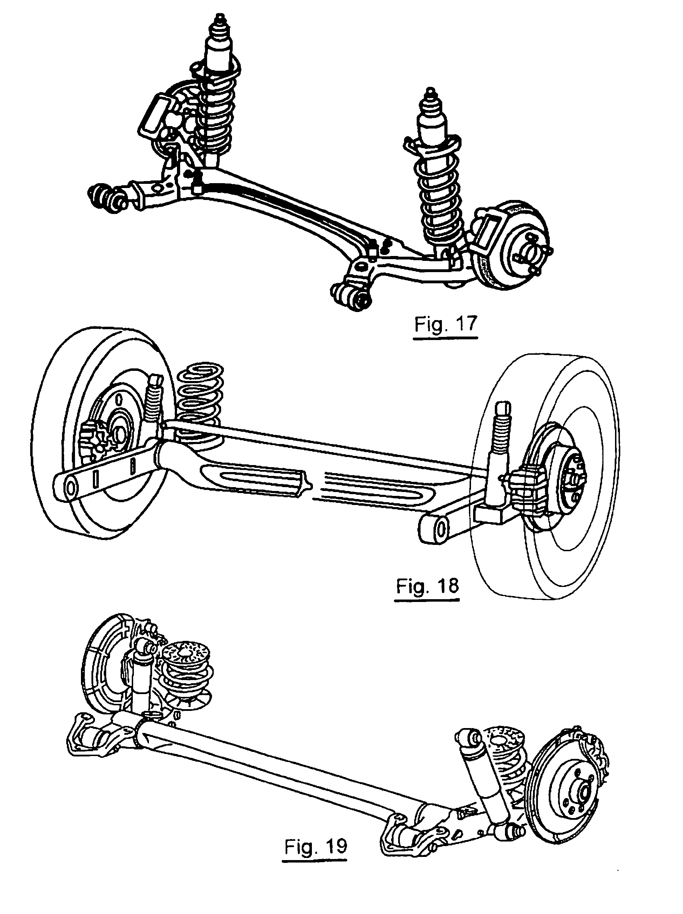

Dans certains cas, la liaison entre la barre de torsion et l'essieu est assurée par assemblage vissé (exemple : Toyota Prius (marques déposées), comme illustré par la figure 17).

La diversité de raideurs est assurée en modifiant les dimensions (diamètre et épaisseur) de la barre de torsion. Cette première technologie présente les inconvénients suivants :
- Le coût de la barre de torsion ;
- La masse de la barre de torsion
- La liaison entre la barre de torsion et l'essieu peut être difficile car très contraintes et localisée à une zone de faible dimension ;
- Le mode vibratoire de la barre est gênant dans certains cas.

Les traverses à section ouverte présentent certes un rapport intéressant entre inertie de flexion et inertie de torsion, mais entraînent donc plusieurs inconvénients au nombre desquels on peut ajouter le fait que ces travers ont tendance à gauchir en torsion.

Le rattrapage progressif d'un tel gauchissement est difficile à maîtriser, ce qui rend très délicat la mise au point de la tenue en endurance de la jonction entre la traverse et les bras longitudinaux.

Pour tenter de contrôler ce gauchissement, on recours traditionnellement à un gousset que l'on vient généralement souder dans l'élément de liaison pour reprendre progressivement le gauchissement.

On note que, dans ce cas, la barre anti-dévers est souvent montée sur ces goussets.

La deuxième technologie consiste à intégrer la fonction raideur anti-dévers à la traverse, comme illustré par les figures 15 et 16.

Dans ce cas, la traverse est constituée d'un tube formé dans sa partie centrale afin d'obtenir les raideurs souhaitées en torsion et flexion (exemple : Peugeot 806 (marques déposées), illustré par la figure 18, ou Opel Zafira (marques déposées), illustré par la figure 19).

Ces traverses à section fermée et évolutive permettent de gérer progressivement le rattrapage du gauchissement et de maîtriser la raideur antiroulis.

La diversité de raideur anti-dévers en fonction des besoins est assurée par modification de la forme de la section de la traverse.

Cette technologie présente notamment l'inconvénient d'engendrer des coûts d'outillages élevés pour gérer les diversités de raideurs. En effet pour chaque raideur anti-dévers souhaitée un outillage de formage de la traverse est nécessaire.

Un autre inconvénient est lié aux fortes contraintes auxquelles est soumise la zone de transition évolutive (portion de la traverse dans laquelle la section évolue rapidement sur une longueur éventuellement courte).

En effet, les déformations de la paroi de la traverse sont importantes et fragilise la zone correspondante.

Il est donc nécessaire de procéder à un traitement thermique pour conférer à la paroi une résistance mécanique suffisante pour résister aux contraintes élevées subies par les zones de transition évolutives.

Toutefois, un tel traitement thermique engendre des difficultés techniques au niveau des accostages : les bords de la zone d'accostage doivent être découpés au laser du fait de la dureté du matériau après traitement thermique, la paroi de la traverse connaît des déformations importantes consécutives au traitement thermique...).

On comprend donc que le traitement thermique de la traverse induit des coûts directs et indirects relativement élevés.

Le document JP 200 17 7 349 décrit un essieu souple comprenant une traverse dont le profil est fermé par un élément rapporté à l'intérieur de laolite tra verse.

### 3 - objectifs de l'invention :

L'invention a notamment pour objectif de pallier les différents inconvénients des techniques connues.

Plus précisément, un premier objectif de l'invention est de fournir des essieux souples pour véhicules automobiles, et un procédé de fabrication correspondant, permettant d'assurer la raideur anti-dévers de l'essieu, en dehors de l'apport de raideur des ressorts de suspension, sans utiliser de barre de torsion et de traverse réalisée à partir d'un profil fermé.

Ainsi, un objectif de l'invention est de fournir de tels essieux, qui soient faciles à fabriquer, sans nécessiter d'outillage spécifique ou complexe, et qui présentent en conséquence un prix de revient réduit, par rapport à l'art antérieur.

Un autre objectif de l'invention est de fournir de tels essieux dont le poids est réduit, par rapport à ceux mettant en oeuvre une barre de torsion.

Encore un autre objectif de l'invention est de fournir une technique permettant une gestion simple, efficace et à coût réduit de la diversité de raideur anti-dévers, en fonction des modèles et des besoins.

### 4. caractéristiques principales de l'invention

Ces objectifs, ainsi que d'autres qui apparaîtront par la suite, sont atteints à l'aide d'un essieu souple pour véhicule automobile, comprenant une traverse reliant deux bras longitudinaux. Selon l'invention, l'essieu comprend au moins un élément rapporté sur ladite traverse de façon à définir en combinaison avec cette dernière un corps creux s'étendant parallèlement à l'axe de ladite traverse au moins sur une portion de celle-ci, de façon à apporter une raideur anti-dévers.

Ce corps creux est ainsi facile à réaliser, et à adapter en fonction des besoins. Il en résulte un essieu peu coûteux et bien adapté.

De façon avantageuse, ledit élément est un élément de tôle, dit tôle de fermeture. On comprend qu'un tel élément est moins coûteux qu'un tube classique, et plus facile à monter et configurer.

Selon un mode de réalisation avantageux, ladite tôle de fermeture est rapportée sur ladite traverse par soudage. Il peut notamment s'agir d'un soudage continu, comprenant deux cordons de soudure sur les bords longitudinaux de ladite tôle de fermeture.

A nouveau, on comprend que cette technique est efficace et d'un coût de revient réduit, puisqu'elle ne nécessite ainsi pas d'outillage spécifique à chaque type d'essieu mais utilise au contraire des moyens classiques de soudage.

Selon un mode de réalisation avantageux, ladite traverse présente une surface concave, en regard dudit élément rapporté, de façon à agrandir le volume dudit corps creux.

On note que l'augmentation de ce volume permet d'augmenter la rigidité. En fonction des besoins, on pourra modifier ce volume, en jouant sur la forme de l'élément rapporté et/ou de cette surface concave.

Pour optimiser notamment la tenue aux sollicitations dues aux dévers de l'essieu, on peut adapter la forme des extrémités de l'élément rapporté.

Ainsi, selon une approche avantageuse, au moins une des extrémités dudit élément rapporté forme une fourche présentant deux doigts.

Selon les cas, lesdits doigts peuvent notamment être sensiblement parallèles l'un par rapport à l'autre, ou former un V, définissant une extrémité évasée.

Selon une autre caractéristique avantageuse, au moins une des extrémités dudit élément rapporté forme un angle non nul avec l'axe principal dudit élément rapporté.

Selon un premier mode de réalisation avantageux de l'invention, ledit ou lesdits éléments rapportés sont montés sur une partie supérieure de ladite traverse.

Selon un cas particulier de ce premier mode de réalisation, au moins un élément rapporté est monté à chaque extrémité de ladite traverse.

Dans ce cas, ladite traverse présente avantageusement à chacune de ses extrémités une portion évolutive présentant une section décroissante en direction de ladite extrémité.

Une telle géométrie de la traverse permet en effet de gérer progressivement le rattrapage du gauchissement, de façon comparable à une traverse dont la section est fermée et évolutive.

Ce cas particulier de mise en oeuvre de l'invention propose donc une combinaison des avantages dispersés dans parmi les solutions antérieures déjà mentionnées précédemment, à savoir :
- les traverses à section ouverte, intéressantes pour leur rapport entre inertie de flexion et inertie de torsion, mais qui ont l'inconvénient de gauchir en torsion ;
- les traverses à section fermée et évolutive, qui permettent de gérer progressivement le rattrapage du gauchissement et de maîtriser la raideur antiroulis.

La mise en oeuvre d'éléments rapportés aux extrémités de la traverse tel que cela vient d'être décrit, permet donc de reprendre les avantages de chacune des solutions antérieures tout en supprimant ou à tout le moins limitant les inconvénients de chacune.

Plus précisément, on conserve le principe d'une traverse à section ouverte dont la mise en forme est particulièrement aisée en introduisant dans celle-ci le principe avantageux d'une portion évolutive à la façon d'une traverse à section fermée, ceci sans qu'il soit nécessaire de recourir à des goussets ou à une barre anti-dévers (pour les traverses à section ouverte antérieures) et en évitant les traitements coûteux des traverses à section fermée.

Selon une solution avantageuse, ledit élément rapporté à chaque extrémité s'étend essentiellement le long de ladite portion évolutive.

On peut ainsi maîtriser le gauchissement de la traverse aux extrémités de celle-ci, avec une bonne efficacité tout en limitant les dimensions de l'élément rapporté. De cette façon, on limite également l'apport de matière sur la traverse et donc le poids de l'essieu.

Préférentiellement, lesdits éléments rapportés aux extrémités de ladite traverse sont conçus pour que ladite traverse combinée auxdits éléments rapportés présente, sur sensiblement toute sa longueur, au moins une partie supérieure de section sensiblement constante.

Un tel agencement permet d'obtenir un corps creux délimité par la portion évolutive de la traverse et par l'élément rapporté sur cette portion, ceci tendant à optimiser le rattrapage du gauchissement et la maîtrise de la raideur, avec un comportement comparable à celui d'une traverse à section fermée.

Selon une solution avantageuse, ladite traverse présente à chacune de ses extrémités une zone d'accostage destinée à épouser un bras longitudinal, et en ce que lesdits éléments rapportés présentent chacun une zone de coopération avec ladite zone d'accostage.

Un tel élément rapporté peut alors contribuer également à améliorer la liaison entre la traverse et les bras longitudinaux, directement au niveau de la zone d'accostage, comme cela va apparaître clairement par la suite.

Dans ce cas, ladite zone de coopération définit préférentiellement une cavité complémentaire de ladite zone d'accostage pour former logement destiné à recevoir un bras longitudinal.

L'étendue des contacts entre la traverse et les bras longitudinaux est ainsi augmentée, ce qui offre des possibilités de soudure permettant d'envisager une meilleure tenue de la liaison.

Préférentiellement, ledit logement s'étend angulairement sur environ 180°. De cette façon, chacune des extrémités de la traverse présente une véritable embouchure dans laquelle vient s'inscrire un bras longitudinal.

Avantageusement, ledit élément rapporté à chaque extrémité de ladite traverse est soudé d'une part à ladite traverse et d'autre part à un bras longitudinal.

Ceci permet de garantir une raideur satisfaisante aux extrémités de la traverse et une rigidité accrue au niveau de la liaison entre la traverse et les bras longitudinaux.

Selon une autre caractéristique avantageuse, chaque élément rapporté aux extrémités de ladite traverse présente au moins deux ailes latérales s'étendant d'une partie supérieure dudit élément jusqu'au voisinage d'une partie inférieure de ladite zone d'accostage de ladite traverse.

En étendant l'élément rapporté aux extrémités de la traverse sur une grande partie de la hauteur de la traverse, on améliore la capacité de cet élément à rattraper le gauchissement et à apporter de la raideur antiroulis.

Selon un deuxième mode de réalisation avantageux, compatible avec le premier, ladite traverse porte au moins deux éléments rapportés, montés symétriquement par rapport à l'axe principal de ladite traverse.

Dans ce cas, lesdits deux éléments rapportés peuvent être montés sur les parties latérales de ladite traverse.

Selon un mode de réalisation particulier, ladite traverse peut présenter une section essentiellement triangulaire. Dans ce cas, lesdits éléments rapportés sont montés sur la base du triangle défini par ladite section et un prolongement horizontal, ou sur les parties latérales.

Selon encore un autre mode de réalisation avantageux, l'essieu comprend au moins un élément rapporté à l'intérieur de ladite traverse.

L'invention concerne également les véhicules automobiles comprenant au moins un essieu tel que décrit ci-dessus.

L'invention concerne encore un procédé de fabrication de tels essieux, comprenant notamment les étapes suivantes :
- obtention d'une traverse et d'au moins un élément à rapporter sur cette dernière ;
- solidarisation dudit élément à rapporter sur ladite traverse, de façon à définir en combinaison avec cette dernière un corps creux s'étendant parallèlement à l'axe de ladite traverse au moins sur une portion de celle-ci, de façon à apporter une raideur anti-dévers.

De façon avantageuse, ladite étape de solidarisation est une étape de soudage.

Préférentiellement, le procédé comprend une étape préalable de conception, dans laquelle la forme, l'épaisseur, le matériau, la forme des extrémités et/ou le nombre du ou desdits éléments à rapporter et/ou la forme, l'épaisseur et/ou le matériau de ladite traverse sont choisis de façon à adapter l'inertie de torsion aux besoins du véhicule.

### 5 - liste des figures :

D'autres caractéristiques et avantages de l'invention apparaîtront plus clairement à la lecture de la description suivante de modes de réalisation préférentiels de l'invention, donnés à titre de simples exemples illustratifs et non limitatifs, et des dessins annexés parmi lesquels :
- La figure 1 est une représentation schématique d'un premier mode de réalisation d'essieu souple selon l'invention ;
- La figure 2 est une représentation d'une section de l'ensemble traverse et tôle de fermeture de l'essieu de la figure 1 ;
- La figure 3 est une représentation vue du dessus d'un premier mode de réalisation d'une extrémité de la tôle de fermeture selon l'invention ;
- La figure 4 est une représentation d'une section de l'ensemble traverse et tôle de fermeture selon un deuxième mode de réalisation de l'invention ;
- La figure 5 est une représentation d'une section de l'ensemble traverse et tôle de fermeture selon un troisième mode de réalisation ;
- La figure 6 est une représentation d'une section de l'ensemble traverse et tôle de fermeture selon un quatrième mode de réalisation ;
- La figure 7 est une représentation d'une section de l'ensemble traverse et tôle de fermeture selon un cinquième mode de réalisation ;
- La figure 8 est une représentation d'une section de l'ensemble traverse et tôle de fermeture selon un sixième mode de réalisation ;
- La figure 9 est une représentation d'une section de l'ensemble traverse et tôle de fermeture selon un septième mode de réalisation ;
- La figure 10 est une représentation vue du dessus d'une extrémité de la tôle de fermeture selon un deuxième mode de réalisation ;
- La figure 11 est une représentation vue du dessus d'une extrémité de la tôle de fermeture selon un troisième mode de réalisation ;
- La figure 12 est une représentation d'une section d'un ensemble traverse et barre de torsion selon un premier mode de réalisation de l'état de la technique ;
- La figure 13 est une représentation d'une section d'un ensemble traverse et barre de torsion selon un deuxième mode de réalisation de l'état de la technique ;
- La figure 14 est une représentation d'une section d'un ensemble traverse et barre de torsion selon un troisième mode de réalisation de l'état de la technique ;
- La figure 15 est une représentation d'une section d'une traverse intégrant la fonction raideur anti-dévers selon l'état de la technique ;
- La figure 16 est une représentation d'une section d'une traverse intégrant la fonction raideur anti-dévers selon un deuxième mode de réalisation de l'état de la technique ;
- La figure 17 est une représentation schématique d'un essieu dont la barre de torsion est liée par vissage à l'essieu selon l'état de la technique ;
- La figure 18 est une représentation schématique d'un essieu dont la fonction raideur anti-dévers est intégrée à la traverse selon l'état de la technique ;
- La figure 19 est une représentation schématique d'un essieu dont la fonction raideur anti-dévers est intégrée à la traverse selon un deuxième mode de réalisation de l'état de la technique ;
- La figure 20 est une vue partielle d'une traverse à l'extrémité de laquelle est monté un élément rapporté selon l'invention ;
- Les figures 21 et 22 illustrent une liaison d'une traverse d'essieu souple avec un bras longitudinal, respectivement en l'absence et en présence d'un élément rapporté selon l'invention.

### 6 - description détaillée de modes de réalisation de l'invention

La présente invention procède donc d'une recherche de conception de la fonction anti-dévers d'un essieu souple en vue d'écarter les difficultés et problèmes susmentionnés.

A cet effet, l'invention propose donc de réaliser la fonction anti-dévers d'un essieu souple à l'aide d'une (ou plusieurs) pièce(s) en tôle liée(s) par exemple par soudage continu à la traverse reliant les deux bras longitudinaux de l'essieu (figures de 1 à 9).

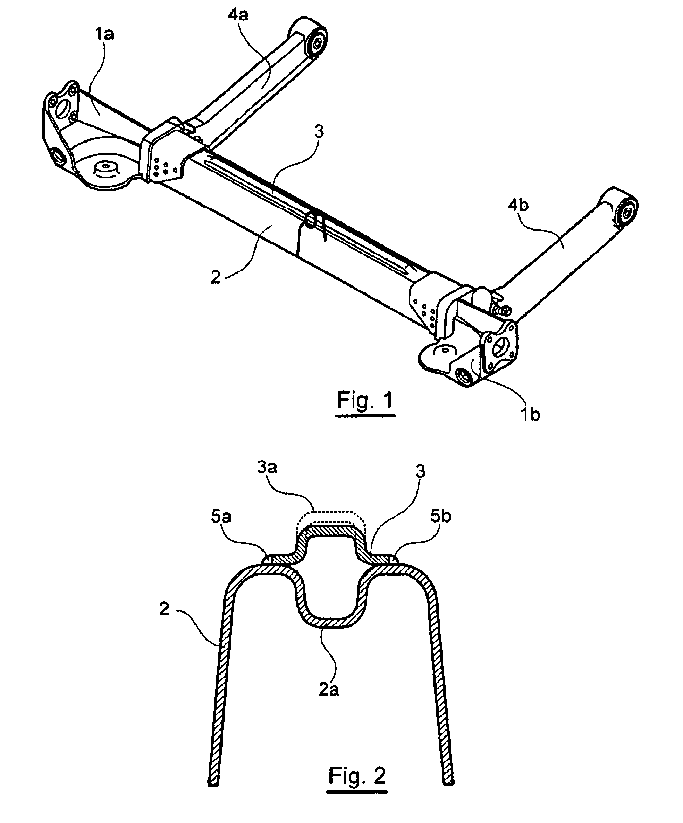

Le corps creux ainsi obtenu permet donc d'obtenir la raideur anti-dévers souhaitée. La gestion de la diversité des raideurs anti-dévers est réalisée par modification de la forme de la pièce tôle rapportée sur la traverse (figure 2).

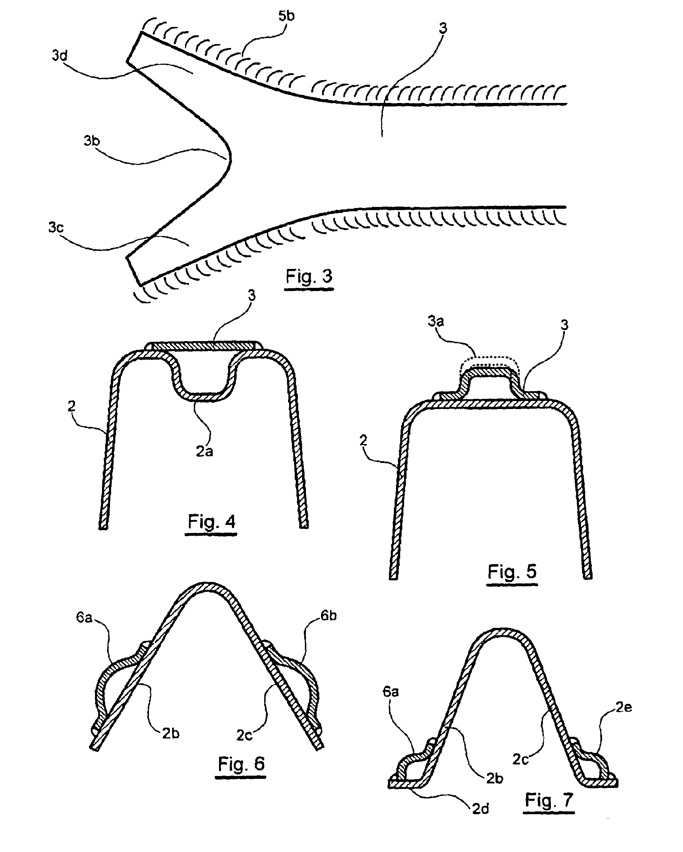

Afin d'améliorer la tenue aux sollicitations dues aux dévers de l'essieu, les extrémités de la pièce en tôle peuvent être réalisées de plusieurs façons (figures 3, 10,11).

Cette approche présente notamment les avantages suivants:
- Masse réduite par rapport à la conception barre de torsion ;
- La gestion de diversité de raideur anti-dévers étant réalisée par la pièce en tôle, les coûts d'outillage se trouvent diminués par rapport à la conception intégrant la fonction à la traverse ;
- Coût réduit, la tôle étant moins chère que le tube.

La figure 1 représente un premier mode de réalisation d'un essieu souple intégrant l'invention.

L'essieu est composé d'une traverse 2 sur laquelle est liée par deux cordons de soudure 5a et 5b, une tôle de fermeture 3. L'assemblage ainsi obtenu présente donc un corps creux assurant l'inertie de torsion nécessaire pour obtenir une raideur anti-dévers à l'essieu.

Lors d'une situation de dévers, l'ensemble traverse 2 et tôle de fermeture 3 est entraîné en torsion par les deux bras longitudinaux de l'essieu composés par les éléments la et 4a à gauche, 1b et 4b à droite.

La figure 2 représente une section de l'assemblage traverse 2 et tôle de fermeture 3 de la figure 3. La traverse 2 peut présenter dans sa partie plane supérieure une forme 2a obtenue par exemple par formage de la tôle permettant d'augmenter le volume creux, et donc l'inertie de torsion de l'ensemble.

La diversité de raideur anti-dévers de l'essieu peut être obtenue en modifiant la forme de la tôle de fermeture (3 ou 3a, par exemple) afin d'augmenter ou diminuer l'inertie de torsion de l'ensemble.

La figure 4 présente un autre mode de réalisation, selon lequel la tôle 3 est plane, et vient recouvrir le logement 2a formé dans la traverse.

La figure 5 illustre encore une autre variante, selon laquelle la partie supérieure de la traverse 2 est plane, la tôle de fermeture 3, 3a pouvant être similaire à celle illustrée en figure 1.

Selon d'autres modes de réalisation illustrés par les figures 6 et 7, la section de la traverse 2 peut être essentiellement triangulaire. Dans ces modes de réalisation, on a prévu deux tôles de fermeture 6a, 6b, montés préférentiellement symétriquement de part et d'autre de la traverse 2, soit :
- figure 6 : sur les parois latérales 2b, 2c ;
- figure 7 : sur un retour, ou prolongement, sensiblement horizontal 2d, 2e et sur la partie inférieure des parois latérales 2b, 2c.

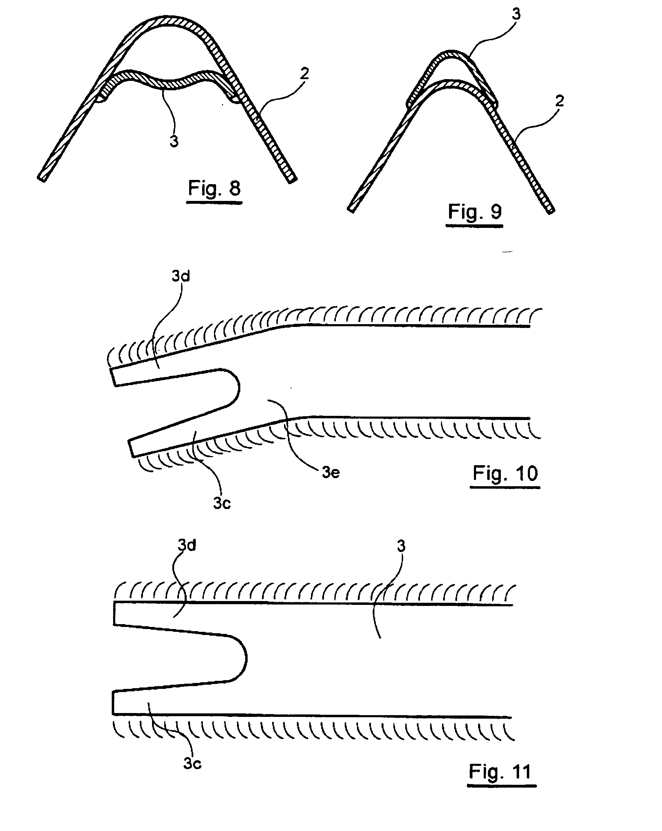

Selon encore un autre mode de réalisation, illustré par la figure 8, la tôle de fermeture 3 peut être rapportée à l'intérieur de la traverse 2.

La figure 9 illustre encore un autre mode de réalisation, selon lequel la tôle 3 vient chevaucher la partie supérieure de la traverse 2 de section triangulaire.

Bien sûr, ces différents modes de réalisation peuvent être combinés et/ou adaptés en fonction des besoins.

Selon un autre aspect de l'invention, les extrémités des tôles de fermeture peuvent être adaptées aux besoins.

Ainsi, la figure 3 représente une des deux extrémités de la tôle de fermeture 3 vue du dessus ainsi que les deux cordons de soudure la reliant à la traverse. Selon ce mode de réalisation, la tôle de fermeture 3 présente une extrémité évasée présentant deux doigts, à l'avant 3d et à l'arrière 3c, afin de limiter les risques de rupture des cordons de soudure 5a et 5b.

Pour les mêmes raisons, la tôle de fermeture 3 peut aussi présenter une ouverture 3b à ces extrémités.

Selon un autre mode de réalisation, illustré par la figure 11, les doigts 3c et 3d peuvent être parallèles à l'axe de la traverse.

Selon encore un autre mode de réalisation, illustré par la figure 10, la partie d'extrémité 3e de la tôle de fermeture peut former un angle non nul avec la partie principale de cette tôle, et être dirigée pour exemple vers l'arrière du véhicule.

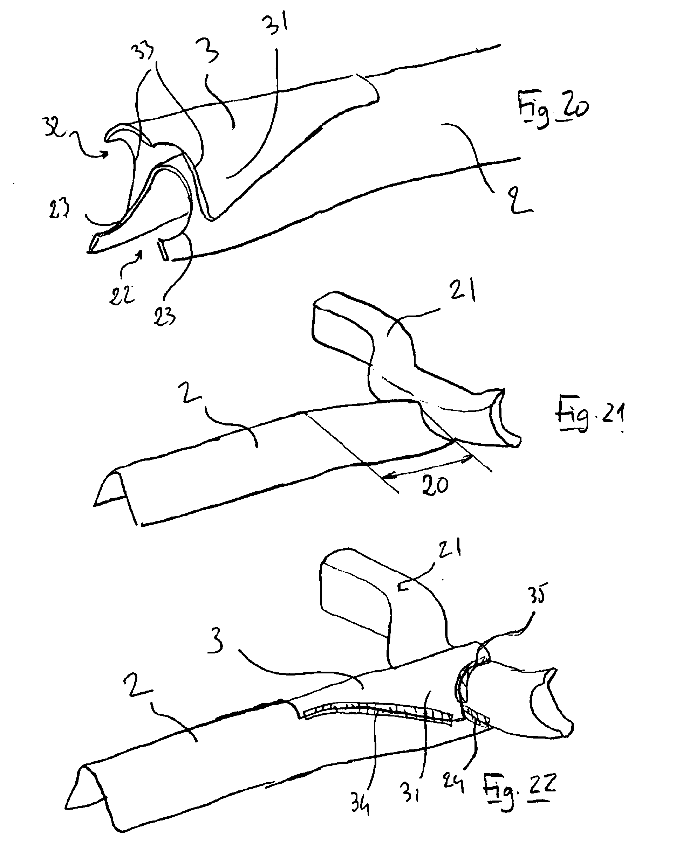

Les figures 20 à 22 illustrent encore un autre mode de réalisation particulier de l'invention, selon lequel un élément rapporté est monté à chaque extrémité de la traverse d'un essieu.

En référence à la figure 21, la traverse 2 présente une portion évolutive 20 le long de laquelle la traverse présente une section décroissante en direction de son extrémité.

Selon le présent mode de réalisation, l'élément en tôle 3 s'étend sur la longueur de cette portion évolutive 20 et présente lui-même une section évolutive de telle sorte que :
- la partie supérieure de l'élément 3 forme une continuité de la traverse 2, l'arête de l'un prolongeant l'arête de l'autre co-linéairement ;
- l'élément 3 présente deux ailes latérales 31 s'étendant sur l'essentiel de la hauteur de la traverse 2.

Tel que cela apparaît sur la figure 20, chaque extrémité de la traverse 2 présente une zone d'accostage 22 constituée par deux bords incurvés 23 dont la forme est prévue pour épouser une portion périphérique d'un bras longitudinal. Ces bords 23 forment donc ensemble un berceau dans lequel vient se loger le bras longitudinal tel qu'illustré par la figure 21.

Selon une caractéristique avantageuse d'un élément rapporté à une extrémité d'une traverse, l'élément 3 présente une zone de coopération 32 avec la zone d'accostage 22 de la traverse.

Cette zone de coopération consiste à compléter la zone d'accostage 22 de la traverse de façon que le logement destiné à recevoir un bras longitudinal s'étende angulairement sur environ 180°.

Pour cela, l'élément 3 présente deux bords incurvés 33 délimitant une cavité destinée à être positionnée au voisinage de la zone d'accostage 22 de la traverse 2.

Ainsi, un logement est formé qui s'étend d'une partie inférieure de la zone d'accostage 22 (allant jusque sous le bras longitudinal) jusqu'à une partie supérieure de la cavité 32 de l'élément 3 (qui vient coiffer le bras longitudinal), tel que cela apparaît sur la figure 22.

Cette figure 22 illustre en outre la position des cordons de soudure solidarisant l'élément 3 à la traverse 2 d'une part, et au bras longitudinal 21 d'autre part.

Un cordon de soudure 34 est rapporté de part et d'autre de la traverse, le long de chacune des ailes latérales 31 de l'élément 3.

Un autre cordon de soudure 35 est rapporté sur chacun des bords 33 de l'élément 3 pour solidariser celui-ci au bras longitudinal 21. Ces cordons 35 constituent une prolongation des cordons 24 entre la zone d'accostage 22 de la traverse et le bras longitudinal.

L'élément 3 étant solidaire de la traverse 2, on obtient donc un prolongement de la longueur de la liaison soudée entre la traverse et le bras longitudinal, ce qui tend bien entendu à améliorer la tenue de la liaison.

## Revendications

1. Essieu souple pour véhicule automobile, comprenant une traverse (2) reliant deux bras longitudinaux (4a), (4b), (21),
**caractérisé en ce qu'**il comprend au moins un élément rapporté (3), (6a), (6b) sur ladite traverse (2) de façon à définir en combinaison avec cette dernière un corps creux s'étendant parallèlement à l'axe de ladite traverse (2) au moins sur une portion de celle-ci, de façon à apporter une raideur anti-dévers, ledit ou lesdits éléments rapportés (3) étant montés sur une partie supérieure et/ou des parties latérales de la traverse.

2. Essieu souple selon la revendication 1, **caractérisé en ce que** ledit élément est un élément (3) de tôle, dit tôle de fermeture.

3. Essieu souple selon la revendication 2, **caractérisé en ce que** ladite tôle de fermeture est rapportée sur ladite traverse (2) par soudage.

4. Essieu souple selon la revendication 3, **caractérisé en ce que** ledit soudage est un soudage continu, comprenant deux cordons de soudure (5a), (5b) sur les bords longitudinaux de ladite tôle de fermeture.

5. Essieu souple selon l'une quelconque des revendications 1 à 4, **caractérisé en ce que** ladite traverse (2) présente une surface concave, en regard dudit élément rapporté (3), de façon à agrandir le volume dudit corps creux.

6. Essieu souple selon l'une quelconque des revendications 1 à 5, **caractérisé en ce qu'**au moins une des extrémités dudit élément rapporté (3) forme une fourche présentant deux doigts (3c), (3d).

7. Essieu souple selon la revendication 6, **caractérisé en ce que** lesdits doigts (3c), (3d) sont sensiblement parallèles l'un par rapport à l'autre.

8. Essieu souple selon la revendication 6, **caractérisé en ce que** lesdits doigts (3c), (3d) forment un V, définissant une extrémité évasée.

9. Essieu souple selon l'une quelconque des revendications 1 à 8, **caractérisé en ce qu'**au moins une des extrémités (3c) dudit élément rapporté forme un angle non nul avec l'axe principal dudit élément rapporté.

10. Essieu souple selon l'une quelconque des revendications 1 à 9, **caractérisé en ce qu'**au moins un élément rapporté (3) est monté à chaque extrémité de ladite traverse.

11. Essieu souple selon l'une quelconque des revendications 1 à 10, **caractérisé en ce** ladite traverse (2) présente à chacune de ses extrémités une portion évolutive (20) présentant une section décroissante en direction de ladite extrémité.

12. Essieu souple selon les revendications 10 et 11, **caractérisé en ce que** ledit élément rapporté (3) à chaque extrémité s'étend essentiellement le long de ladite portion évolutive (20).

13. Essieu souple selon la revendication 12, **caractérisé en ce que** lesdits éléments rapportés (3) aux extrémités de ladite traverse (2) sont conçus pour que ladite traverse (2) combinée auxdits éléments rapportés (3) présente, sur sensiblement toute sa longueur, au moins une partie supérieure de section sensiblement constante.

14. Essieu souple selon l'une quelconque des revendications 1 à 13, **caractérisé en ce que** ladite traverse (2) présente à chacune de ses extrémités une zone d'accostage (22) destinée à épouser un bras longitudinal (21), et **en ce que** lesdits éléments rapportés (31) présentent chacun une zone de coopération (32) avec ladite zone d'accostage (22).

15. Essieu souple selon la revendication 14, **caractérisé en ce que** ladite zone de coopération (32) définit une cavité complémentaire de ladite zone d'accostage (22) pour former logement destiné à recevoir un bras longitudinal (21).

16. Essieu souple selon la revendication 15, **caractérisé en ce que** ledit logement s'étend angulairement sur environ 180°.

17. Essieu souple selon l'une des revendications 15 et 16, **caractérisé en ce que** ledit élément rapporté (3) à chaque extrémité de ladite traverse (2) est soudé d'une part à ladite traverse (2) et d'autre part à un bras longitudinal (21).

18. Essieu souple selon l'une quelconque des revendications 14 à 17, **caractérisé en ce que** chaque élément rapporté (3) aux extrémités de ladite traverse (2) présente au moins deux ailes latérales (31) s'étendant d'une partie supérieure dudit élément (3) jusqu'au voisinage d'une partie inférieure de ladite zone d'accostage (22) de ladite traverse (2).

19. Essieu souple selon l'une quelconque des revendications 1 à 18, **caractérisé en ce que** ladite traverse (2) porte au moins deux éléments rapportés (3), montés symétriquement par rapport à l'axe principal de ladite traverse.

20. Essieu souple selon l'une quelconque des revendications 1 à 19, **caractérisé en ce que** ladite traverse (2) présente une section essentiellement triangulaire.

21. Essieu souple selon la revendication 20, **caractérisé en ce que** lesdits éléments rapportés (6a), (6b) sont montés sur la base du triangle défini par ladite section et un prolongement horizontal (2e), (2d).

22. Véhicule automobile, **caractérisé en ce qu'**il comprend au moins un essieu selon l'une quelconque des revendications 1 à 21.

23. Procédé de fabrication d'un essieu selon l'une quelconque des revendications 1 à 22, **caractérisé en ce qu'**il comprend les étapes suivantes :
- obtention d'une traverse (2) et d'au moins un élément à rapporter (3) sur une partie supérieure et/ou des parties latérales de cette dernière ;
- solidarisation dudit élément à rapporter (3) sur ladite traverse (2), de façon à définir en combinaison avec cette dernière un corps creux s'étendant parallèlement à l'axe de ladite traverse (2) au moins sur une portion de celle-ci, de façon à apporter une raideur anti-dévers.

24. Procédé selon la revendication 23, **caractérisé en ce que** ladite étape de solidarisation est une étape de soudage.

## Claims

1. Flexible axle for a motor vehicle, comprising a cross-beam (2) connecting two longitudinal arms (4a), (4b), (21), **characterized in that** it comprises at least one fitted element (3), (6a), (6b) on the said cross-beam (2) so as to define in combination with the latter a hollow body extending parallel to the axis of the said cross-beam (2) at least over a portion of the latter, so as to provide an anti-sway rigidity, the said fitted element or elements (3) being mounted on an upper portion and/or on lateral portions of the cross-beam.

2. Flexible axle according to Claim 1, **characterized in that** the said element is an element (3) of metal sheet, called closure sheet.

3. Flexible axle according to Claim 2, **characterized in that** the said closure sheet is fitted to the said cross-beam (2) by welding.

4. Flexible axle according to Claim 3, **characterized in that** the said welding is a continuous weld comprising two beads of weld (5a), (5b) on the longitudinal edges of the said closure sheet.

5. Flexible axle according to any one of Claims 1 to 4, **characterized in that** the said cross-beam (2) has a concave surface, facing the said fitted element (3), so as to enlarge the volume of the said hollow body.

6. Flexible axle according to any one of Claims 1 to 5, **characterized in that** at least one of the ends of the said fitted element (3) forms a fork having two prongs (3c), (3d).

7. Flexible axle according to Claim 6, **characterized in that** the said prongs (3c), (3d) are substantially parallel with one another.

8. Flexible axle according to Claim 6, **characterized in that** the said prongs (3c), (3d) form a V, defining a flared end.

9. Flexible axle according to any one of Claims 1 to 8, **characterized in that** at least one of the ends (3c) of the said fitted element forms a non-zero angle with the main axis of the said fitted element.

10. Flexible axle according to any one of Claims 1 to 9, **characterized in that** at least one fitted element (3) is mounted at each end of the said cross-beam.

11. Flexible axle according to any one of Claims 1 to 10, **characterized in that** the said cross-beam (2) has, at each of its ends, an upgradable portion (20) having a cross section that decreases in the direction of the said end.

12. Flexible axle according to Claims 10 and 11, **characterized in that** the said fitted element (3) at each end extends essentially along the said upgradable portion (20).

13. Flexible axle according to Claim 12, **characterized in that** the said fitted elements (3) at the ends of the said cross-beam (2) are designed so that the said cross-beam (2) combined with the said fitted elements (3) has, over substantially the whole of its length, at least one upper portion with a substantially constant cross section.

14. Flexible axle according to any one of Claims 1 to 13, **characterized in that** the said cross-beam (2) has, at each of its ends, a meeting zone (22) designed to conform to the shape of a longitudinal arm (21), and **in that** the said fitted elements (31) each have a zone of interaction (32) with the said meeting zone (22).

15. Flexible axle according to Claim 14, **characterized in that** the said interaction zone (32) defines a cavity matching the said meeting zone (22) in order to form a housing designed to receive a longitudinal arm (21).

16. Flexible axle according to Claim 15, **characterized in that** the said housing extends angularly over approximately 180°.

17. Flexible axle according to one of Claims 15 and 16, **characterized in that** the said fitted element (3) at each end of the said cross-beam (2) is welded on the one hand to the said cross-beam (2) and on the other hand to a longitudinal arm (21).

18. Flexible axle according to any one of Claims 14 to 17, **characterized in that** each fitted element (3) at the ends of the said cross-beam (2) has at least two lateral flanges (31) extending from an upper portion of the said element (3) to the vicinity of a lower portion of the said meeting zone (22) of the said cross-beam (2).

19. Flexible axle according to any one of Claims 1 to 18, **characterized in that** the said cross-beam (2) supports at least two fitted elements (3) mounted symmetrically relative to the main axis of the said cross-beam.

20. Flexible axle according to any one of Claims 1 to 19, **characterized in that** the said cross-beam (2) has an essentially triangular cross section.

21. Flexible axle according to Claim 20, **characterized in that** the said fitted elements (6a), (6b) are mounted on the base of the triangle defined by the said cross section and a horizontal extension (2e), (2d).

22. Motor vehicle, **characterized in that** it comprises at least one axle according to any one of Claims 1 to 21.

23. Method for manufacturing an axle according to any one of Claims 1 to 21, **characterized in that** it comprises the following steps:
- obtaining a cross-beam (2) and at least one element to be fitted (3) to an upper portion and/or lateral portions of the latter;
- securing of the said element to be fitted (3) to the said cross-beam (2) so as to define, in combination with the latter, a hollow body extending parallel to the axis of the said cross-beam (2) at least over a portion of the latter, so as to provide an anti-sway rigidity.

24. Method according to Claim 23, **characterized in that** the said securing step is a welding step.

## Patentansprüche

1. Elastische Radachse für Kraftfahrzeug, mit einer Querstrebe (2), die zwei Längslenker (4a), (4b), (21) verbindet,
**dadurch gekennzeichnet, dass** sie wenigstens ein an die Querstrebe (2) angefügtes Element (3), (6a), (6b) aufweist, derart, dass in Kombination mit dieser Letzteren ein Hohlkörper definiert wird, der sich parallel zur Längsachse dieser Querstrebe (2) wenigstens auf einem Abschnitt derselben erstreckt, so dass eine Wankverhinderungssteifigkeit geschaffen wird, wobei das oder die angefügten Elemente (3) an einem oberen Teil und/oder an seitlichen Teilen der Querstrebe angebracht sind.

2. Elastische Radachse nach Anspruch 1, **dadurch gekennzeichnet, dass** das Element ein Element (3) aus Blech, einem so genannten Verschlussblech, besteht.

3. Elastische Radachse nach Anspruch 2, **dadurch gekennzeichnet, dass** das Verschlussblech an die Querstrebe (2) durch Schweißen angefügt ist.

4. Elastische Radachse nach Anspruch 3, **dadurch gekennzeichnet, dass** diese Schweißung eine Nahtschweißung ist, die an den longitudinalen Rändern des Verschlussblechs zwei Schweißnähte (5a), (5b) aufweist.

5. Elastische Radachse nach einem der Ansprüche 1 bis 4, **dadurch gekennzeichnet, dass** die Querstrebe (2) gegenüber dem angefügten Element (3) eine konkave Oberfläche aufweist, derart, dass das Volumen des Hohlkörpers vergrößert ist.

6. Elastische Radachse nach einem der Ansprüche 1 bis 5, **dadurch gekennzeichnet, dass** wenigstens eines der Enden des angefügten Elements (3) eine Gabel bildet, die zwei Zinken (3c), (3d) aufweist.

7. Elastische Radachse nach Anspruch 6, **dadurch gekennzeichnet, dass** die Zinken (3c), (3d) relativ zueinander parallel sind.

8. Elastische Radachse nach Anspruch 6, **dadurch gekennzeichnet, dass** die Zinken (3c), (3d) ein V bilden, das ein erweitertes Ende definiert.

9. Elastische Radachse nach einem der Ansprüche 1 bis 8, **dadurch gekennzeichnet, dass** wenigstens eines der Enden (3c) des angefügten Elements mit der Hauptachse des angefügten Elements einen von null verschiedenen Winkel bildet.

10. Elastische Radachse nach einem der Ansprüche 1 bis 9, **dadurch gekennzeichnet, dass** an jedem Ende der Querstrebe wenigstens ein angefügtes Element (3) angebracht ist.

11. Elastische Radachse nach einem der Ansprüche 1 bis etwa 10, **dadurch gekennzeichnet, dass** die Querstrebe (2) an jedem ihrer Enden einen erweiterten Abschnitt (20) aufweist, der einen in Richtung des Endes abnehmenden Querschnitt aufweist.

12. Elastische Radachse nach einem der Ansprüche 10 und 11, **dadurch gekennzeichnet, dass** sich das angefügte Element (3) an jedem Ende im Wesentlichen längs des erweiterten Abschnitts (20) erstreckt.

13. Elastische Radachse nach Anspruch 12, **dadurch gekennzeichnet, dass** die angefügten Elemente (3) an den Enden der Querstrebe (2) so beschaffen sind, dass die mit diesen angefügten Elementen (3) kombinierte Querstrebe (2) im Wesentlichen auf ihrer gesamten Länge wenigstens einen oberen Teil mit im Wesentlichen konstantem Querschnitt aufweist.

14. Elastische Radachse nach einem der Ansprüche 1 bis 13, **dadurch gekennzeichnet, dass** die Querstrebe (2) an jedem ihrer Enden eine Auflaufzone (22) aufweist, die dazu bestimmt ist, sich an einen Längslenker (21) anzuschmiegen, und dass die angefügten Elemente (31) jeweils eine Zone (32) für die Zusammenwirkung mit der Auflaufzone (22) aufweisen.

15. Elastische Radachse nach Anspruch 14, **dadurch gekennzeichnet, dass** die Zusammenwirkungszone (32) einen zu der Auflaufzone (22) komplementären Hohlraum definiert, um einen Aufnahmesitz zu bilden, der dazu bestimmt ist, einen Längslenker (21) aufzunehmen.

16. Elastische Radachse nach Anspruch 15, **dadurch gekennzeichnet, dass** sich der Aufnahmesitz in Winkelrichtung über etwa 180° erstreckt.

17. Elastische Radachse nach einem der Ansprüche 15 und 16, **dadurch gekennzeichnet, dass** das angefügte Element (3) an jedem Ende der Querstrebe (2) einerseits mit der Querstrebe (2) und andererseits mit einem Längslenker (21) verschweißt ist.

18. Elastische Radachse nach einem der Ansprüche 14 bis 17, **dadurch gekennzeichnet, dass** jedes angefügte Element (3) an den Enden der Querstrebe (2) wenigstens zwei seitliche Flansche (31) aufweist, die sich von einem oberen Teil des Elements (3) bis in die Umgebung eines unteren Teils der Auflaufzone (22) der Querstrebe (2) erstrecken.

19. Elastische Radachse nach einem der Ansprüche 1 bis 18, **dadurch gekennzeichnet, dass** die Querstrebe (2) wenigstens zwei angefügte Elemente (3) trägt, die in Bezug auf die Hauptachse der Querstrebe symmetrisch angebracht sind.

20. Elastische Radachse nach einem der Ansprüche 1 bis 19, **dadurch gekennzeichnet, dass** die Querstrebe (2) einen im Wesentlichen dreieckigen Querschnitt aufweist.

21. Elastische Radachse nach Anspruch 20, **dadurch gekennzeichnet, dass** die angefügten Elemente (6a), (6b) an der Basis des Dreiecks, das durch den Querschnitt und eine horizontale Verlängerung (2e), (2d) definiert ist, angebracht sind.

22. Kraftfahrzeug, **dadurch gekennzeichnet, dass** es wenigstens eine Radachse nach einem der Ansprüche 1 bis 21 enthält.

23. Verfahren für die Herstellung einer Radachse nach einem der Ansprüche 1 bis 21, **dadurch gekennzeichnet, dass** es die folgenden Schritte enthält:
- Erhalten einer Querstrebe (2) und wenigstens eines an einem oberen Teil und/oder an seitlichen Teilen dieser Letzteren anzufügenden Elements (3);
- Befestigen des anzufügenden Elements (3) an der Querstrebe (2), derart, dass in Kombination mit dieser Letzteren ein Hohlkörper definiert wird, der sich parallel zur Längsachse dieser Querstrebe (2) wenigstens über einen Abschnitt derselben erstreckt, derart, dass eine Wankverhinderungssteifigkeit geschaffen wird.

24. Verfahren nach Anspruch 23, **dadurch gekennzeichnet, dass** der Befestigungsschritt ein Schweißschritt ist.
